# EUROPÄISCHE PATENTSCHRIFT

(11) **EP 3 181 431 B1**
(45) Veröffentlichungstag und Bekanntmachung des Hinweises auf die Patenterteilung: **19.08.2020**
(21) Anmeldenummer: 16203220.5
(22) Anmeldetag: 09.12.2016
(51) Int. Cl.: B62D 6/10, G01L 3/10, G01D 5/245, G01D 3/036, G01D 5/14

(54) **DREHMOMENTSENSORVORRICHTUNG UND KRAFTFAHRZEUG MIT EINER SOLCHEN DREHMOMENTSENSORVORRICHTUNG**
TORQUE DETECTION DEVICE AND MOTOR VEHICLE WITH SUCH A TORQUE DETECTION DEVICE
DISPOSITIF DE DÉTECTION DE COUPLE ET VÉHICULE COMPRENANT UN TEL DISPOSITIF DE DÉTECTION DE COUPLE

(30) Priorität: 18.12.2015 DE 102015122179
(43) Veröffentlichungstag der Anmeldung: 21.06.2017
(73) Patentinhaber: Valeo Schalter und Sensoren GmbH, 74321 Bietigheim-Bissingen (DE)
(72) Erfinder: Froehlich, Ekkehart, 74321 Bietigheim-Bissingen (DE); Rachui, Dirk, 74321 Bietigheim-Bissingen (DE); Thom, Jens, 74321 Bietigheim-Bissingen (DE)
(74) Vertreter: Pothmann, Karsten

(56) Entgegenhaltungen:
- DE-A1- 10 334 204
- DE-A1-102013 205 313
- US-A1- 2009 230 953
- US-A1- 2010 013 465
- US-A1- 2013 125 669
- US-A1- 2013 152 702
- US-A1- 2013 181 702

## Beschreibung

Die Erfindung betrifft eine Drehmomentsensorvorrichtung zur Erfassung eines auf eine Welle aufgebrachten Drehmoments, insbesondere zur Erfassung eines auf eine Lenkwelle eines Kraftfahrzeugs aufgebrachten Drehmoments, wobei die Drehmomentsensorvorrichtung eine Sendeeinrichtung mit einem Sendeelement und eine erste Empfangseinrichtung mit wenigstens einem ersten Magnetsensor aufweist. Die erste Empfangseinrichtung ist dabei zum Empfangen eines von der Sendeeinrichtung ausgesendeten und entlang eines Signalweges zur ersten Empfangseinrichtung übertragenen Signals ausgebildet. Anhand des von der ersten Empfangseinrichtung empfangenen Signals kann das auf die Welle aufgebrachte Drehmoment ermittelt werden.

Mit derartigen Drehmomentsensorvorrichtungen kann üblicherweise, ein auf eine Welle aufgebrachtes Drehmoment erfasst werden, in Kraftfahrzeugen insbesondere ein vom Fahrer auf eine Lenkwelle aufgebrachtes Lenkmoment. Gattungsgemäße Drehmomentsensorvorrichtungen werden beispielsweise bei elektrischen Lenksystemen eingesetzt, um den elektrischen Antriebsmotor des Lenksystems basierend auf dem von einem Fahrer aufgebrachten Lenkmoment anzusteuern, beispielsweise um eine entsprechende Lenkunterstützung bereitzustellen.

In der Regel werden Drehmomentsensorvorrichtungen dazu in Verbindung mit einer axial geteilten Welle und mit einem Torsionsstab mit definierter, bekannter Torsionssteifigkeit eingesetzt, wobei der Torsionsstab dabei einen ersten Teil der axial geteilten Welle mit einem zweiten Teil der axial geteilten Welle verbindet.

Wird ein Drehmoment auf die Welle aufgebracht, bewirkt dies eine Verdrehung der beiden Teile der Welle zueinander um einen messbaren Verdrehwinkel, wobei der Verdrehwinkel sich abhängig vom aufgebrachten Drehmoment und der Steifigkeit des Torsionsstabes einstellt, so dass aus dem erfassten Verdrehwinkel bei definierter, bekannter Steifigkeit des Torsionsstabes das aufgebrachte Drehmoment ermittelt werden kann.

Zur Messung des infolge eines aufgebrachten Drehmoments resultierenden Verdrehwinkels sind verschiedene Messprinzipien und Sensoranordnungen bekannt, wobei sehr häufig magnetische Sensorsysteme zum Einsatz kommen, bei denen ein umlaufender, meistens als Permanentmagnet ausgebildeter Ringmagnet mit dem ersten Teil der Lenkwelle drehfest verbunden ist und bei denen ein Halter mit einem magnetisch leitfähigen Stator drehfest mit dem zweiten Teil der Welle verbunden ist, wobei der Stator in radialer Richtung mit einem kleinen Luftspalt konzentrisch um den Ringmagneten herum angeordnet ist. Über den Stator, welcher üblicherweise aus zwei separaten Statorteilen mit jeweils einem ringscheibenförmigen Bereich besteht, kann der magnetische Fluss des Ringmagneten zu einem Magnetsensor, beispielsweise einem Hall-Sensor, geleitet werden und ausgewertet werden.

Wird der drehfest mit dem ersten Teil der Welle verbundene Ringmagnet durch eine Rotationsbewegung der Welle relativ zum mit dem zweiten Teil der Welle verbundenen Stator bewegt, ändert sich die magnetische Flussdichte im Stator, was mittels des Magnetsensors erfasst werden kann. Die Änderung der magnetischen Flussdichte im Stator ist dabei unter anderem abhängig von der Größe der Relativbewegung des Ringmagneten gegenüber dem Stator, d.h. vom Verdrehwinkel. Somit kann aus der Änderung der erfassten Flussdichte auf den Verdrehwinkel geschlossen werden und aus dem Verdrehwinkel wiederum kann mit Kenntnis der Torsionssteifigkeit des Torsionsstabs das auf die Welle aufgebrachte Drehmoment ermittelt werden.

Drehmomentsensorvorrichtungen für Lenkwellen von Kraftfahrzeugen sind aus dem Stand der Technik grundsätzlich bekannt, beispielsweise aus der DE 10 2013 006 379 A1 oder der EP 1 269 133 B1. Das Dokument US2013/0181702 A1, das als nächstliegender Stand der Technik angesehen wird, offenbart eine Drehmomentsensorvorrichtung gemäß dem Oberbegriff des Anspruchs 1.

Beeinflusst ein in der Umgebung der Drehmomentsensoreinrichtung vorhandenes magnetisches Störfeld, beispielsweise ein durch in der Nähe befindlicher, elektrischer Maschinen, wie beispielsweise Elektromotoren oder Generatoren, erzeugtes magnetisches Störfeld, jedoch die vom Stator an den Magnetsensor der Drehmomentsensorvorrichtung übertragene Flussdichte, und bewirkt das Störfeld insbesondere eine Änderung der übertragenen Flussdichte, wird ein falsches Signal erzeugt und infolgedessen ein falscher Drehmomentwert ermittelt.

Aufgabe der Erfindung ist es, eine verbesserte Drehmomentsensorvorrichtung bereitzustellen, insbesondere eine Drehmomentsensorvorrichtung mit einem verringerten Einfluss wenigstens eines, in der Umgebung der Drehmomentsensorvorrichtung vorhandenen, magnetischen Störfeldes auf den ermittelten Drehmomentwert.

Diese Aufgabe wird durch eine erfindungsgemäße Drehmomentsensorvorrichtung sowie durch ein erfindungsgemäßes Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche der Beschreibung und der Figuren und werden im Folgenden näher erläutert.

Eine erfindungsgemäße Drehmomentsensorvorrichtung weist eine Sendeeinrichtung mit einem Sendeelement und eine erste Empfangseinrichtung mit wenigstens einem ersten Magnetsensor auf, wobei die erste Empfangseinrichtung zum Empfangen eines von der Sendeeinrichtung ausgesendeten und entlang eines Signalweges zur ersten Empfangseinrichtung übertragenen Signals ausgebildet ist. Dabei kann anhand des von der ersten Empfangseinrichtung empfangenen Signals das auf die Welle aufgebrachte Drehmoment ermittelt werden. Die Drehmomentsensorvorrichtung weist erfindungsgemäß ferner wenigstens eine weitere Empfangseinrichtung mit wenigstens einem weiteren Magnetsensor auf, wobei die weitere Empfangseinrichtung wenigstens zur teilweisen Erfassung eines auf die Drehmomentsensorvorrichtung wirkenden, in der Umgebung der Drehmomentsensorvorrichtung vorhandenen magnetischen Störfeldes ausgebildet ist.

Gattungsgemäße Drehmomentvorrichtungen, insbesondere deren Aufbau und die erforderliche Ausgestaltung von Sendeeinrichtung und erster Empfangseinrichtung sowie die Ausgestaltung und Anordnung der einzelnen Komponenten dieser, insbesondere zueinander und in Bezug auf die Welle, auf die das Drehmoment aufgebracht wird, sind aus dem Stand grundsätzlich bekannt. Insbesondere aus der DE 10 2013 006 379 A1 oder der EP 1 269 133 B1, auf die hiermit für weitere Informationen zur grundsätzlichen Funktionsweise und zum Aufbau einer erfindungsgemäßen Drehmomentsensorvorrichtung ausdrücklich verwiesen wird.

Bevorzugt ist eine erfindungsgemäße Drehmomentsensorvorrichtung dabei zur Erfassung eines auf eine Welle aufgebrachten Drehmoments ausgebildet, wobei die Welle einen ersten Teil und einen, relativ zum ersten Teil verdrehbaren, zweiten Teil aufweist und insbesondere der erste Teil und der zweite Teil der Welle mittels eines Torsionsstabs miteinander verbunden sind. Bevorzugt ist eine erfindungsgemäße Drehmomentsensorvorrichtung dabei dazu ausgebildet, die Verdrehung des ersten Teils der Welle gegenüber dem zweiten Teil der Welle zu erfassen. Mit Kenntnis der Torsionssteifigkeit des Torsionsstabs der Welle kann aus der erfassten Verdrehung der Welle das aufgebrachte Drehmoment ermittelt werden.

Das Sendelement der Sendeeinrichtung ist bevorzugt, wie aus dem Stand der Technik bekannt, ein Permanentmagnet, insbesondere ein als Permanentmagnet ausgebildeter, in Umfangsrichtung vollständig geschlossener Ringmagnet oder ein Permanentmagnet, der zwar in Umfangrichtung nicht vollständig geschlossen ist und aus mehreren Ringsegmenten gebildet, aber derart ausgebildet ist, dass er nahezu wie ein vollständig geschlossen ausgebildeter Ringmagnet wirkt.

Der erste Magnetsensor der ersten Empfangseinrichtung ist vorzugsweise, wie ebenfalls aus dem Stand der Technik bekannt, ein einfacher Hall-Sensor, mit dem eine senkrecht zur Sensorfläche des Hall-Sensors verlaufende magnetische Flussdichte eines Magnetfeldes bzw. ein Anteil der senkrecht zur Sensorfläche verlaufenden magnetischen Flussdichte des Magnetfeldes detektiert werden kann, wobei besonders bevorzugt wenigstens der erste Magnetsensor, insbesondere sämtliche Magnetsensoren der ersten Empfangseinrichtung, gehäusefest angeordnet sind, d.h. stationär bzw. ortsfest gegenüber der drehbaren Welle.

Soll die magnetische Flussdichte unterschiedlich orientierter Magnetfelder bzw. deren Anteile detektiert werden, weist die erste Empfangseinrichtung bevorzugt neben dem ersten Magnetsensor wenigstens einen weiteren einfachen Hall-Sensor auf, wobei die einzelnen Magnetsensoren bevorzugt jeweils in Abhängigkeit von der Orientierung des jeweils zu detektierenden Magnetfeldes ausgerichtet sind.

Statt mehrerer einfacher Hall-Sensoren kann die erste Empfangseinrichtung auch ein oder mehrere 3D-Hall-Sensoren aufweisen, mit welchen jeweils der dreidimensionale Vektor der magnetischen Flussdichte eines Magnetfeldes erfasst werden kann.

Die weitere Empfangseinrichtung weist als weiteren Magnetsensor ebenfalls bevorzugt einen einfachen Hall-Sensor auf. In einigen Anwendungsfällen, insbesondere wenn das magnetische Störfeld in mehreren Richtungen im Raum orientiert ist, kann es jedoch vorteilhafter sein, einen oder mehrere einfache und/oder als 3D-Hall-Sensoren ausgebildete Magnetsensoren einzusetzen.

Bevorzugt weist die Drehmomentsensorvorrichtung, insbesondere wenn das Sendeelement durch einen Permanent-Ringmagneten gebildet ist, einen, mit dem zweiten Teil der Welle drehfest verbindbaren Stator zum Leiten eines magnetischen Flusses vom Sendelement zur ersten Empfangseinrichtung auf.

Zur Bündelung, insbesondere zur Verstärkung, und zur Weiterleitung des magnetischen Flusses vom Stator an die erste Empfangseinrichtung kann es vorteilhaft sein, wenn die Drehmomentsensorvorrichtung wenigstens einen Flussleiter, vorzugsweise zwei parallel und beabstandet zueinander angeordnete Flussleiter, aufweist. Dadurch kann eine bessere Auflösung und damit eine bessere Genauigkeit der Drehmomentsensorvorrichtung erreicht werden. Bevorzugt ist wenigstens einer der Flussleiter am Stator angeordnet und entweder direkt am Stator befestigt oder indirekt über einen Halter. Der bzw. die Flussleiter können aber auch an einem Gehäuse der Drehmomentsensorvorrichtung angeordnet sein.

In einer vorteilhaften Ausgestaltung einer erfindungsgemäßen Drehmomentsensorvorrichtung weist die Drehmomentsensorvorrichtung außerdem eine Steuerungseinrichtung auf, die dazu ausgebildet ist, in Abhängigkeit von dem mittels der weiteren Empfangseinrichtung wenigstens zumindest teilweise erfassten magnetischen Störfeldes zumindest teilweise einen Einfluss des magnetischen Störfeldes auf das von der ersten Empfangseinrichtung erfasste Signal herauszurechnen.

Bei entsprechender Positionierung und Orientierung des wenigstens einen weiteren Magnetsensors der weiteren Empfangseinrichtung kann mit Hilfe des von der weiteren Empfangseinrichtung erfassten Störfeldes bzw. mit Hilfe von dessen Anteil somit ein entsprechender Einfluss wenigstens eines magnetischen Störfeldes bzw. wenigstens eines Anteils auf das von der ersten Empfangseinrichtung erfasste Signal zumindest teilweise ermittelt und herausgerechnet werden. D.h. es lässt sich eine teilweise Störfeldkompensation realisieren.

Die Qualität der Störfeldkompensation ist dabei im Wesentlichen davon abhängig, wie gut das bzw. die magnetischen Störfelder in der Umgebung der Drehmomentsensorvorrichtung bzw. deren Einfluss auf das von der ersten Empfangseinrichtung empfangene Signal erfasst werden, insbesondere in Richtung der von der ersten Empfangseinrichtung detektierten magnetischen Flussdichte. Je nach Art des weiteren Magnetsensors kommt es dabei entscheidend auf die Orientierung des weiteren Magnetsensors der weiteren Empfangseinrichtung an, d.h. wie dieser gegenüber den Magnetsensoren der ersten Empfangseinrichtung und gegenüber dem magnetischen Störfeld angeordnet ist.

In einer weiteren vorteilhaften Ausgestaltung einer erfindungsgemäßen Drehmomentsensorvorrichtung ist daher wenigstens der weitere Magnetsensor der weiteren Empfangseinrichtung zur Erfassung einer magnetischen Flussdichte des magnetischen Störfeldes derart orientiert angeordnet, dass die magnetische Flussdichte des Störfeldes in einer Richtung parallel zur Richtung wenigstens einer magnetischen Flussdichte erfasst wird, die von wenigstens einem Magnetsensor der ersten Empfangseinrichtung erfasst wird.

In einer weiteren vorteilhaften Ausgestaltung einer erfindungsgemäßen Drehmomentsensorvorrichtung sind daher wenigstens der erste Magnetsensor der ersten Empfangseinrichtung und wenigstens der weitere Magnetsensor der weiteren Empfangseinrichtung auf einer gemeinsamen Leiterplatte angeordnet. Dadurch lässt sich auf einfache Art und Weise sicherstellen, dass der weitere Magnetsensor mit der gleichen Orientierung angeordnet ist wie der erste Magnetsensor und somit eine magnetische Flussdichte bzw. die Änderung einer magnetischen Flussdichte in der gleichen Richtung bzw. in den gleichen Richtungen erfasst wird, wie vom ersten Magnetsensor.

Selbstverständlich können auch weitere Komponenten, insbesondere weitere Magnetsensoren der ersten Empfangseinrichtung und/oder der weiteren Empfangseinrichtung auf dieser Leiterplatte angeordnet sein, sofern dies je nach Art der Komponenten und den bestehenden Anforderungen an deren Orientierung im Raum technisch sinnvoll erscheint. Ebenso gut ist es möglich, die einzelnen Komponenten auf mehrere Leiterplatten, vorzugsweise mit unterschiedlichen Orientierungen im Raum, zu verteilen.

In einer weiteren Ausgestaltung einer erfindungsgemäßen Drehmomentsensorvorrichtung ist wenigstens der weitere Magnetsensor der weiteren Empfangseinrichtung, vorzugsweise sämtliche weiteren Magnetsensoren der weiteren Empfangseinrichtung, außerhalb eines magnetisch wirksamen Volumens angeordnet, welches bei der Übertragung des magnetischen Flusses von der Sendeeinrichtung zur ersten Empfangseinrichtung vom magnetischen Fluss durchströmt wird. Dadurch kann eine Beeinflussung des weiteren Magnetsensors durch das vom Sendeelement erzeugte und zur ersten Empfangseinrichtung übertragene Magnetfeld bzw. durch dessen magnetische Flussdichte erheblich reduziert werden.

In einer weiteren vorteilhaften Ausgestaltung einer erfindungsgemäßen Drehmomentsensorvorrichtung ist wenigstens der weitere Magnetsensor der weiteren Empfangseinrichtung auch außerhalb eines vom magnetisch wirksamen Volumen herum wirkenden magnetischen Streufeldes angeordnet, vorzugsweise sämtliche Magnetsensoren der weiteren Empfangseinrichtung.

Unter einem magnetischen Streufeld im Sinne der Erfindung wird dabei ein magnetisches Kraftfeld verstanden, das nicht innerhalb eines Bauteils aus einem magnetischen Werkstoff verläuft, sondern außerhalb davon.

D.h. mit anderen Worten, ist wenigstens der weitere Magnetsensor der weiteren Empfangseinrichtung bevorzugt soweit beabstandet von dem durch das Sendeelement erzeugten Magnetfeld entfernt angeordnet, insbesondere außerhalb der Reichweite des vom Sendelement erzeugten Magnetfeldes, dass eine Beeinflussung des weiteren Magnetsensors vollständig vermieden werden kann.

In einer weiteren vorteilhaften Ausgestaltung einer erfindungsgemäßen Drehmomentsensorvorrichtung weist die Drehmomentsensorvorrichtung wenigstens eine Abschirmvorrichtung zur magnetischen Abschirmung der weiteren Empfangseinrichtung vom Streufeld auf, insbesondere wenigstens zur Abschirmung des weiteren Magnetsensors der weiteren Empfangseinrichtung, wobei die Abschirmvorrichtung vorzugsweise wenigstens ein entsprechend ausgebildetes und entsprechend angeordnetes Abschirmblech aufweist.

Dadurch kann, insbesondere wenn ein ausreichender Abstand bauraumbedingt nicht möglich ist oder, wenn der weitere Magnetsensor der weiteren Empfangseinrichtung mit dem ersten Magnetsensor auf einer gemeinsamen Leiterplatte angeordnet werden soll und sich infolgedessen in einer gewissen räumlichen Nähe zu dem vom ersten Magnetsensor erfassten Magnetfeld befindet, auf einfache Art und Weise eine ausreichende Abschirmung der weiteren Empfangseinrichtung bzw. wenigstens des weiteren Magnetsensors erreicht werden.

In einer weiteren Ausgestaltung einer erfindungsgemäßen Drehmomentsensorvorrichtung weist die Drehmomentsensorvorrichtung wenigstens einen Flussleiter zum Bündeln eines magnetischen Flusses wenigstens eines Störfeldes in der Umgebung der Drehmomentsensorvorrichtung und zum Weiterleiten des gebündelten, magnetischen Flusses des Störfeldes an die weitere Empfangseinrichtung auf, insbesondere an den wenigstens einen weiteren Magnetsensor. Dadurch kann die magnetische Flussdichte des Störfeldes gebündelt und damit quasi verstärkt werden, so dass die weitere Empfangseinrichtung, insbesondere der weitere Magnetsensor, im zugehörigen Messbereich betrieben werden kann. Ohne einen Flussleiter kann es ansonsten passieren, insbesondere bei einem sehr schwachen Störfeld, dass die magnetische Flussdichte zu gering ist, das Signal also quasi zu schwach ist, und somit vom weiteren Magnetsensor nicht erfasst wird, da es außerhalb dessen Messbereich liegt.

Ein erfindungsgemäßes Kraftfahrzeug mit einer Lenkwelle und einer Drehmomentsensorvorrichtung zur Erfassung eines auf die Lenkwelle aufgebrachten Drehmoments weist eine erfindungsgemäße Drehmomentsensorvorrichtung auf.

Die mit Bezug auf die Drehmomentsensorvorrichtung vorgestellten, vorteilhaften Ausgestaltungen und deren Vorteile gelten dabei nicht nur für die Drehmomentsensorvorrichtung, sondern auch entsprechend für ein erfindungsgemäßes Kraftfahrzeug. Weitere Merkmale der Erfindung ergeben sich aus den Ansprüchen, den Figuren und der Figurenbeschreibung.

Die Erfindung wird nun anhand mehrerer, bevorzugter Ausführungsbeispiele unter Bezugnahme auf die beigefügten Zeichnungen näher erläutert, wobei Bauteile bzw.

Abschnitte mit gleicher oder ähnlicher Funktion zugunsten eines einfacheren Verständnisses gleiche Bezugszeichen aufweisen, auch wenn sie sich in ihrer konstruktiven Ausgestaltung unterscheiden.

Es zeigen:
- Fig. 1: ein erstes Ausführungsbeispiel einer erfindungsgemäßen Drehmomentsensorvorrichtung 10 in perspektivischer Darstellung,
- Fig. 2: ein Ausschnitt der erfindungsgemäßen Drehmomentsensorvorrichtung aus Fig. 1 in vergrößerter Darstellung in Seitenansicht,
- Fig. 3: die erfindungsgemäße Drehmomentsensorvorrichtung aus Fig. 1 in Ansicht von vorne mit visualisiertem, magnetisch wirksamem Volumen, welches bei der Übertragung des magnetischen Flusses vom Sendeelement zur ersten Empfangseinsicht vom magnetischen Fluss durchströmt wird,
- Fig. 4: ein zweites Ausführungsbeispiel einer erfindungsgemäßen Drehmomentsensorvorrichtung in Ansicht von vorne und
- Fig. 5: ein drittes Ausführungsbeispiel einer erfindungsgemäßen Drehmomentsensorvorrichtung, ebenfalls in Ansicht von vorne. jedoch ohne das Sendeelement.

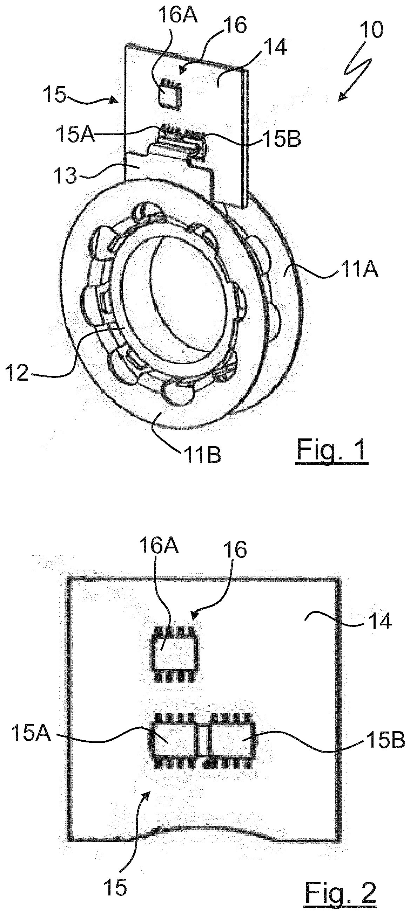

Fig. 1 zeigt ein erstes Ausführungsbeispiel einer erfindungsgemäßen Drehmomentsensorvorrichtung 10, welche speziell zur Erfassung eines auf eine Lenkwelle eines Kraftfahrzeugs aufgebrachten Drehmoments konzipiert ist. Die erfindungsgemäße Drehmomentsensorvorrichtung 10 ist dabei zur Anordnung auf einer hier nicht dargestellten, um eine Drehachse drehbaren Lenkwelle ausgebildet, welchen einen ersten Teil und einen zweiten Teil aufweist, wobei der erste Teil der Lenkwelle und der zweite Teil der Lenkwelle über einen ebenfalls nicht dargestellten Torsionsstab in axialer Richtung miteinander verbunden sind.

Die erfindungsgemäße Drehmomentsensorvorrichtung 10 weist dabei zur Erfassung eines auf die Lenkwelle aufgebrachten Drehmomentes als Sendelement einer Sendeeinrichtung einen mit dem ersten Teil der Lenkwelle drehfest verbindbaren Permanent-Ringmagneten 12 auf und, eine gehäusefest angeordnete, erste Empfangseinrichtung 15 mit einem ersten Magnetsensor 15A und einem zweiten Magnetsensor 15B sowie einen mit dem zweiten Teil der Lenkwelle drehfest verbindbaren Stator mit zwei Statorteilen 11A und 11B zum Leiten eines magnetischen Flusses vom Ringmagneten 12 zur ersten Empfangseinrichtung 15.

Die beiden Magnetsensoren 15A und 15B der ersten Empfangseinrichtung 15, die jeweils durch einen einfachen Hall-Sensor 15A bzw. 15B gebildet sind, sind dabei auf der gleichen Seite einer gemeinsamen Leiterplatte 14 befestigt, welche stationär an einem, die Drehmomentsensorvorrichtung 10 umgebenden, hier nicht dargestellten Gehäuse befestigt werden kann. Die Leiterplatte 14 ist dabei in radialer Richtung außerhalb der Lenkwelle angeordnet und mit ihrer Leiterplattenebene senkrecht zur Drehachse der Lenkwelle orientiert.

Der Stator, von dem in dieser Darstellung nur die beiden Statorteile 11A und 11B erkennbar dargestellt sind, weist einen aus Kunststoff ausgebildeten Statorhalter auf an dem die zwei Statorteile 11A und 11B befestigt sind. Die beiden Statorteile 11A und 11B sind dabei jeweils weichmagnetisch ausgebildet und somit magnetisch leitend und zum Leiten das vom Ringmagneten 12 erzeugten magnetischen Flusses zur ersten Empfangseinrichtung 15 auf der Leiterplatte 14 vorgesehen. Der Stator kann dabei mittels des hier nicht dargestellten Statorhalters mit dem zweiten Teil der Lenkwelle drehfest verbunden werden, so dass der Stator einer Rotationsbewegung der Lenkwelle folgen kann und sich relativ gegenüber der ersten Empfangseinrichtung 15, insbesondere gegenüber dem ersten Magnetsensor 15A und dem zweiten Magnetsensor 15B, bewegen kann.

Die beiden magnetisch leitenden Statorteile 11A und 11B weisen jeweils einen senkrecht zur Drehachse der Lenkwelle orientierten und sich in radialer Richtung nach außen erstreckenden, ringscheibenförmig ausgebildeten Bereich auf und sind vom Statorhalter jeweils derart aufgenommen, dass die ringscheibenförmig ausgebildeten Bereiche jeweils in axialer Richtung voneinander beabstandet in parallelen Ebenen und mit einem Luftspalt konzentrisch zum Ringmagneten 12 angeordnet sind. Da die Statorteile 11A und 11B magnetisch leitend ausgebildet sind, stellt sich aufgrund des Magnetfeldes des Ringmagneten 12 ein magnetischer Fluss in den Statorteilen 11A und 11B ein. Dadurch bildet sich u.a. zwischen den beiden ringscheibenförmigen Bereichen der Statorteile 11A und 11B ein axial ausgerichtetes Magnetfeld aus.

Sind die auf der Leiterplatte 14 befestigten Magnetsensoren 15A und 15B der ersten Empfangseinrichtung 15, wie bei dem in Fig. 1 gezeigten Ausführungsbeispiel einer erfindungsgemäßen Drehmomentsensorvorrichtung 10, in axialer Richtung zwischen den ringscheibenförmig ausgebildeten Bereich der Statorteile 11A und 11B angeordnet, kann der vom Ringmagneten 12 in den Statorteilen 11A und 11B erzeugte magnetische Fluss erfasst werden.

Zur Verstärkung der Flussdichte im Bereich der beiden Magnetsensoren 15A und 15B der ersten Empfangseinrichtung 15, und damit zur Verbesserung der Auflösung der Drehmomentsensoreinrichtung 10, weist die Drehmomentsensorvorrichtung 10 im Bereich der beiden Magnetsensoren 15A und 15B zusätzlich noch zwei plattenförmige Flussleiter 13 auf, von denen hier nur einer erkennbar dargestellt ist, welche jeweils über entsprechende Halter und ebenfalls in axialer Richtung beabstandet zueinander, in jeweils parallelen, senkrecht zur Drehachse verlaufenden Ebenen orientiert, gehäusefest angeordnet sind.

Bei dieser Drehmomentsensorvorrichtung 10 ist die Leiterplatte 14 mit den darauf befestigten Magnetsensoren 15A und 15B der ersten Empfangseinrichtung 15 derart zwischen den ringscheibenförmig ausgebildeten Bereichen der Statorteile 11A und 11B angeordnet, dass sich die beiden Magnetsensoren 15A und 15B der ersten Empfangseinrichtung 15 in axialer Richtung genau in der Mitte, d.h. in einer radialen Mittelebene, zwischen dem ringscheibenförmig ausgebildeten Bereichen der Statorteile 11A und 11B befindet.

Wird die Lenkwelle durch ein auf die Lenkwelle aufgebrachtes Drehmoment tordiert und der erste Teil der Lenkwelle relativ zum zweiten Teil der Lenkwelle verdreht, wird dadurch eine Relativbewegung des Ringmagneten 12 gegenüber dem Stator erzeugt, wodurch sich die magnetische Flussdichte in den beiden Statorteilen 11A und 11B ändert, insbesondere in den ringscheibenförmigen Bereichen, was von den beiden Magnetsensoren 15A und 15B der ersten Empfangseinrichtung 15 erfasst werden kann. Aus der erfassten Flussdichte bzw. der erfassten Flussdichte-Änderung kann auf eine relative Position des Ringmagneten 12 gegenüber dem Stator geschlossen werden, d.h. auf den Verdrehwinkel. Mit Kenntnis der Steifigkeit des Torsionsstabes lässt sich daraus das auf die Lenkwelle aufgebrachte Drehmoment ermitteln.

Erfindungsgemäß weist die erfindungsgemäße Drehmomentsensorvorrichtung 10 außerdem eine weitere Empfangseinrichtung 16 mit einem weiteren Magnetsensor 16A auf, der ebenfalls als einfacher Hall-Sensor ausgebildet ist. Dabei ist die weitere Empfangseinrichtung 16, insbesondere der weitere Magnetsensor 16A, zur teilweisen Erfassung eines auf die Drehmomentsensorvorrichtung 10 in der Umgebung der Drehmomentsensorvorrichtung 10 vorhandenen und auf die Drehmomentsensorvorrichtung 10 wirkenden magnetischen Störfeldes ausgebildet.

Die erfindungsgemäße Drehmomentsensorvorrichtung 10 weist ferner eine hier ebenfalls nicht erkennbar dargestellte Steuerungseinrichtung auf, die dazu ausgebildet ist, wenigstens in Abhängigkeit von dem mittels der weiteren Empfangseinrichtung 16 zumindest teilweise erfassten, magnetischen Störfeld zumindest teilweise einen Einfluss des magnetischen Störfeldes auf das von der ersten Empfangseinrichtung 15 erfasste Signal herauszurechnen. D.h., die erfindungsgemäße Drehmomentsensorvorrichtung 10 ist entsprechend dazu ausgebildet, rechnerisch einen störenden Einfluss eines die Drehmomentsensorvorrichtung 10 umgebenden magnetischen Störfeldes zumindest teilweise herauszurechnen bzw. zu kompensieren. Dazu kann beispielsweise ein richtiger, einem tatsächlich anliegenden Drehmoment zuzuordnender Signalwert aus der Differenz der von der ersten Empfangseinrichtung 15 erfassten Signalwerte und den mittels der weiteren Empfangseinrichtung 16 erfassten Signalwerten ermittelt werden.

Um den störenden Einfluss eines die Drehmomentsensorvorrichtung 10 umgebenden, magnetischen Störfeldes auf das von der ersten Empfangseinrichtung 15 empfangene Signal, insbesondere das von den beiden Magnetsensoren 15A und 15B detektierte Magnetfeld, möglichst gut kompensieren bzw. herausrechnen zu können, ist eine besonders gute Erfassung der Anteile des magnetischen Störfeldes erforderlich, welche von der ersten Empfangseinrichtung 15 fälschlicherweise detektiert werden und somit zu einer Verfälschung des ermittelten Drehmomentsignals führen. Denn nur die von der ersten Empfangseinrichtung 15 detektierten Anteile des magnetischen Störfeldes führen auch zu einer Verfälschung des Drehmomentsignals. Nicht von der ersten Empfangseinrichtung 15 detektierte Anteile des magnetischen Störfeldes wirken sich hingegen nicht auf das ermittelte Drehmoment aus, so dass für diese auch keine Störgrößenkompensation erforderlich ist.

Für eine möglichst gute Erfassung der Anteile des magnetischen Störfeldes, welche das von der ersten Empfangseinrichtung 15 empfangene Signal beeinflussen, ist, wie in Fig. 2 gut erkennbar dargestellt ist, der weitere Magnetsensor 16A der weiteren Empfangseinrichtung 16 in diesem Fall derart orientiert angeordnet, dass die magnetische Flussdichte des Störfeldes in der gleichen Richtung erfasst wird wie die magnetische Flussdichte, die von den beiden Magnetsensoren 15A und 15B der ersten Empfangseinrichtung 15 erfasst wird.

Um das in der Umgebung vorhandene, magnetische Störfeld in mehreren Raumrichtungen zu erfassen, können mehrere einfache Hall-Sensoren vorgesehen sein, oder aber auch ein oder mehrere 3D-Hall-Sensoren verwendet werden.

Damit sichergestellt ist, dass das von der weiteren Empfangseinrichtung 16, insbesondere das vom weiteren Magnetsensor 16A detektierte Magnetfeld, nur auf das in der Umgebung vorhandene, magnetische Störfeld zurückzuführen ist, ist die weitere Empfangseinrichtung 16, insbesondere der weitere Magnetsensor 16A, des Weiteren außerhalb eines hier mit Kreuzschraffur dargestellten, magnetisch wirksamen Volumens 17, welches bei der Übertragung des magnetischen Flusses vom Ringmagneten 12 zur ersten Empfangseinrichtung 15 vom magnetischen Fluss durchströmt wird, angeordnet. Darüber hinaus ist der weitere Magnetsensor 16A außerdem außerhalb eines vom magnetisch wirksamen Volumen 17 herum wirkenden magnetischen Streufeldes angeordnet. Dadurch kann die Beeinflussung des weiteren Magnetsensors 16 A durch das vom Ringmagneten 12 erzeugte Magnetfeld verhindert werden.

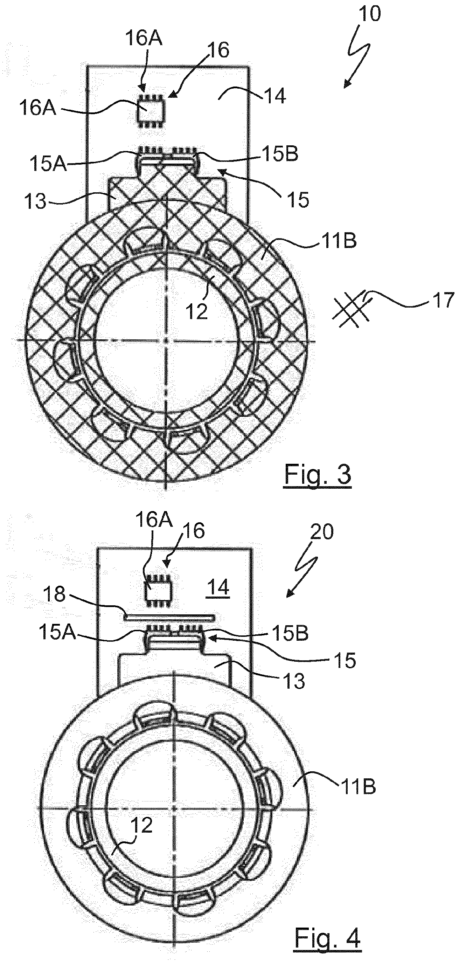

Ist es, aus was für Gründen auch immer, beispielsweise aus Bauraumgründen oder dergleichen nicht möglich, die weitere Empfangseinrichtung 16, insbesondere den weiteren Magnetsensor 16A, dabei ausreichend weit bzw. mit ausreichend Abstand zum Streufeld des magnetisch wirksamen Volumens 17 anzuordnen, kann mittels einer Abschirmvorrichtung, beispielsweise in Form eines Abschirmbleches 18, wie bei einem in Fig. 4 dargestellten zweiten Ausführungsbeispiel einer erfindungsgemäßen Drehmomentsensorvorrichtung 20, Abhilfe geschaffen werden.

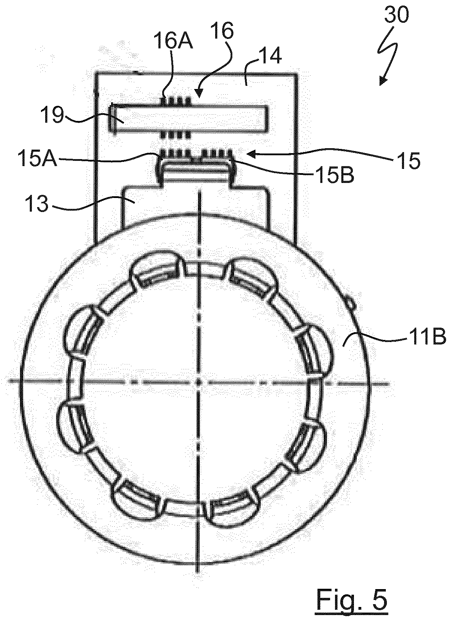

Insbesondere wenn das magnetische Störfeld nur sehr schwach ist, kann es ferner vorteilhaft sein, um den weiteren Magnetsensor 16A bzw. die weitere Empfangseinrichtung 16 in einen vorgesehenen Messbereich betreiben zu können, zur Verstärkung der magnetischen Flussdichte einen Flussleiter 19 bzw. einen Flusssammler 19, wie bei dem in Fig. 5 dargestellten dritten Ausführungsbeispiel einer erfindungsgemäßen Drehmomentsensorvorrichtung 30, vorzusehen. Aufgabe dieses Flussleiters 19 ist es, den magnetischen Fluss des magnetischen Störfeldes zu bündeln und diesen konzentriert an den weiteren Magnetsensor 16A weiter zu geben.

Selbstverständlich ist eine Vielzahl konstruktiver Abwandlungen zu den erläuterten Ausführungsbeispielen möglich, ohne den Inhalt der Patentansprüche zu verlassen.

## Patentansprüche

1. Drehmomentsensorvorrichtung (10, 20, 30) zur Erfassung eines auf eine Welle aufgebrachten Drehmoments, insbesondere zur Erfassung eines auf eine Lenkwelle eines Kraftfahrzeugs aufgebrachten Drehmoments, wobei die Drehmomentsensorvorrichtung (10, 20, 30) eine Sendeeinrichtung (12) mit einem Sendeelement (12) und eine erste Empfangseinrichtung (15) mit wenigstens einem ersten Magnetsensor (15A, 15B) aufweist, wobei die erste Empfangseinrichtung (15) zum Empfangen eines von der Sendeeinrichtung (12) ausgesendeten und entlang eines Signalweges zur ersten Empfangseinrichtung (15) übertragenen Signals ausgebildet ist, wobei anhand des von der ersten Empfangseinrichtung (15) empfangenen Signals das auf die Welle aufgebrachte Drehmoment ermittelbar ist und die Drehmomentsensorvorrichtung (10, 20, 30) wenigstens eine weitere Empfangseinrichtung (16) mit wenigstens einem weiteren Magnetsensor (16A) aufweist, wobei die weitere Empfangseinrichtung (16) wenigstens zur teilweisen Erfassung eines auf die Drehmomentsensorvorrichtung (10, 20, 30) wirkenden, in der Umgebung der Drehmomentsensorvorrichtung (10, 20, 30) vorhandenen magnetischen Störfeldes ausgebildet ist,
wobei wenigstens der weitere Magnetsensor (16A) der weiteren Empfangseinrichtung (16), vorzugsweise sämtliche Magnetsensoren der weiteren Empfangseinrichtung (16A), außerhalb eines magnetisch wirksamen Volumens (17), welches bei der Übertragung des magnetischen Flusses von der Sendeeinrichtung (12) zur ersten Empfangseinrichtung (15) vom magnetischen Fluss durchströmt wird, angeordnet ist
**dadurch gekennzeichnet, dass**
die Drehmomentsensorvorrichtung (30) wenigstens einen Flussleiter (19) zum Bündeln eines magnetischen Flusses wenigstens eines Störfeldes in der Umgebung der Drehmomentsensorvorrichtung (30) und zum Weiterleiten des gebündelten, magnetischen Flusses des Störfeldes an die weitere Empfangseinrichtung (16), insbesondere an den wenigstens einen weiteren Magnetsensor (16A), aufweist.

2. Drehmomentsensorvorrichtung (10, 20, 30) nach Anspruch 1, **dadurch gekennzeichnet, dass** die Drehmomentsensorvorrichtung (10, 20, 30) eine Steuerungseinrichtung aufweist, die dazu ausgebildet ist, wenigstens in Abhängigkeit von dem mittels der weiteren Empfangseinrichtung (16) zumindest teilweise erfassten magnetischen Störfeldes zumindest teilweise einen Einfluss des magnetischen Störfeldes auf das von der ersten Empfangseinrichtung (15) erfasste Signal herauszurechnen.

3. Drehmomentsensorvorrichtung (10, 20, 30) nach Anspruch 1 oder 2, **dadurch gekennzeichnet, dass** wenigstens der weitere Magnetsensor (16A) der weiteren Empfangseinrichtung (16) zur Erfassung einer magnetischen Flussdichte des magnetischen Störfeldes derart orientiert angeordnet ist, dass die magnetische Flussdichte des Störfeldes in einer Richtung parallel zur Richtung wenigstens einer magnetischen Flussdichte erfasst wird, die von wenigstens einem Magnetsensor (15A, 15B) der ersten Empfangseinrichtung (15) erfasst wird.

4. Drehmomentsensorvorrichtung (10, 20, 30) nach wenigstens einem der vorgenannten Ansprüche, **dadurch gekennzeichnet, dass** wenigstens der erste Magnetsensor (15A) der ersten Empfangseinrichtung (15) und wenigstens der weitere Magnetsensor (16A) der weiteren Empfangseinrichtung (16) auf einer gemeinsamen Leiterplatte (14) angeordnet sind.

5. Drehmomentsensorvorrichtung (10, 20, 30) nach wenigstens einem der vorgenannten Ansprüche, insbesondere nach Anspruch 4, **dadurch gekennzeichnet, dass** wenigstens der weitere Magnetsensor (16A) der weiteren Empfangseinrichtung (16), außerhalb eines vom magnetisch wirksamen Volumen (17) wirkenden magnetischen Streufeldes angeordnet ist, vorzugsweise sämtliche weiteren Magnetsensoren (16A) der weiteren Empfangseinrichtung (16).

6. Drehmomentsensorvorrichtung (20) nach wenigstens einem der vorgenannten Ansprüche, **dadurch gekennzeichnet, dass** die Drehmomentsensorvorrichtung (20) wenigstens eine Abschirmvorrichtung (18) zur magnetischen Abschirmung der weiteren Empfangseinrichtung (16) vom Streufeld aufweist, insbesondere wenigstens zur Abschirmung des weiteren Magnetsensors (16A) der weiteren Empfangseinrichtung (16), wobei die Abschirmvorrichtung (18) vorzugsweise wenigstens ein entsprechend ausgebildetes und entsprechend angeordnetes Abschirmblech (18) aufweist.

7. Kraftfahrzeug mit einer Lenkwelle und einer Drehmomentsensorvorrichtung (10, 20, 30) zur Erfassung eines auf die Lenkwelle aufgebrachten Drehmoments,
**dadurch gekennzeichnet, dass**
die Drehmomentsensorvorrichtung (10, 20, 30) nach einem der Ansprüche 1 bis 6 ausgebildet ist.

## Claims

1. Torque sensor device (10, 20, 30) for sensing a torque which is applied to a shaft, in particular for sensing a torque which is applied to a steering shaft of a motor vehicle, wherein the torque sensor device (10, 20, 30) has a transmitter apparatus (12) with a transmitter element (12) and a first receiver apparatus (15) with at least one first magnetic sensor (15A, 15B), wherein the first receiver apparatus (15) is designed to receive a signal which is emitted by the transmitter apparatus (12) and transmitted along a signal path to the first receiver apparatus (15), wherein the torque which is applied to the shaft can be determined on the basis of the signal received by the first receiver apparatus (15), and the torque sensor device (10, 20, 30) has at least one further receiver apparatus (16) with at least one further magnetic sensor (16A), wherein the further receiver apparatus (16) is designed to carry out at least partial sensing of a magnetic interference field which acts on the torque sensor device (10, 20, 30) and is present in the surroundings of the torque sensor device (10, 20, 30), wherein at least the further magnetic sensor (16A) of the further receiver apparatus (16), preferably all the magnetic sensors of the further receiver apparatus (16A) is/are arranged outside a magnetically effective volume (17) through which the magnetic flux flows during the transmission of the magnetic flux from the transmitter apparatus (12) to the first receiver apparatus (15),
**characterized in that**
the torque sensor device (30) has at least one flux conductor (19) for bundling magnetic flux of at least one interference field in the surroundings of the torque sensor device (30) and for passing on the bundled magnetic flux of the interference field to the further receiver apparatus (16), in particular to the at least one further magnetic sensor (16A).

2. Torque sensor device (10, 20, 30) according to Claim 1, **characterized in that** the torque sensor device (10, 20, 30) has a control apparatus which is designed to at least partially eliminate by calculation an influence of the magnetic interference field on the signal acquired by the first receiver apparatus (15), in accordance with the magnetic interference field which is at least partially sensed by means of the further receiver apparatus (16).

3. Torque sensor device (10, 20, 30) according to Claim 1 or 2, **characterized in that** in order to sense a magnetic flux density of the magnetic interference field at least the further magnetic sensor (16A) of the further receiver apparatus (16) is arranged oriented in such a way that the magnetic flux density of the interference field is sensed in a direction parallel to the direction of at least one magnetic flux, which is sensed by at least one magnetic sensor (15A, 15B) of the first receiver apparatus (15).

4. Torque sensor device (10, 20, 30) according to at least one of the abovementioned claims, **characterized in that** at least the first magnetic sensor (15A) of the first receiver apparatus (15) and at least the further magnetic sensor (16A) of the further receiver apparatus (16) are arranged on a common circuit board (14).

5. Torque sensor device (10, 20, 30) according to at least one of the abovementioned claims, in particular according to Claim 4, **characterized in that** at least the further magnetic sensor (16A) of the further receiver apparatus (16), preferably all the further magnetic sensors (16A) of the further receiver apparatus (16), is/are arranged outside a magnetic stray field which is produced by the magnetically effective volume (17).

6. Torque sensor device (20) according to at least one of the abovementioned claims, **characterized in that** the torque sensor device (20) has at least one shielding device (18) for mechanically shielding the further receiver apparatus (16) from the stray field, in particular at least for shielding the further magnetic sensor (16A) of the further receiver apparatus (16), wherein the shielding device (18) preferably has at least one shielding plate (18) which is embodied and arranged in a corresponding fashion.

7. Motor vehicle having a steering shaft and a torque sensor device (10, 20, 30) for sensing a torque which is applied to the steering shaft,
**characterized in that**
the torque sensor device (10, 20, 30) is embodied according to one of Claims 1 to 6.

## Revendications

1. Dispositif de détection de couple (10, 20, 30) pour détecter un couple appliqué sur un arbre, en particulier pour détecter un couple appliqué sur un arbre de direction d'un véhicule automobile, dans lequel le dispositif de détection de couple (10, 20, 30) présente un dispositif d'émission (12) doté d'un élément d'émission (12) et un premier dispositif de réception (15) doté d'au moins un premier capteur magnétique (15A, 15B), dans lequel le premier dispositif de réception (15) est réalisé pour recevoir un signal émis par le dispositif d'émission (12) et transmis sur un trajet de signal au premier dispositif de réception (15), dans lequel le signal reçu depuis le premier dispositif de réception (15) permet de déterminer le couple appliqué sur l'arbre, et le dispositif de détection de couple (10, 20, 30) présente au moins un dispositif de réception supplémentaire (16) doté d'au moins un capteur magnétique supplémentaire (16A), dans lequel le dispositif de réception supplémentaire (16) est réalisé au moins pour la détection partielle d'un champ parasite magnétique existant au niveau du dispositif de détection de couple (10, 20, 30) et agissant sur le dispositif de détection de couple (10, 20, 30), dans lequel au moins le capteur magnétique supplémentaire (16A) du dispositif de réception supplémentaire (16), de préférence l'ensemble des capteurs magnétiques du dispositif de réception supplémentaire (16A), est disposé en dehors d'un volume magnétiquement efficace (17) par lequel passe le flux magnétique lors de la transmission du flux magnétique du dispositif d'émission (12) au premier dispositif de réception (15),
**caractérisé en ce que** le dispositif de détection de couple (30) présente au moins un conducteur de flux (19) pour concentrer un flux magnétique d'au moins un champ parasite au niveau du dispositif de détection de couple (30) et pour retransmettre le flux magnétique concentré du champ parasite au dispositif de réception supplémentaire (16) en particulier audit au moins un capteur magnétique supplémentaire (16A).

2. Dispositif de détection de couple (10, 20, 30) selon la revendication 1, **caractérisé en ce que** le dispositif de détection de couple (10, 20, 30) présente un dispositif de commande qui est réalisé pour déduire au moins en partie une influence du champ parasite magnétique sur le signal détecté par le premier dispositif de réception (15), au moins en fonction du champ parasite magnétique détecté au moins en partie au moyen du dispositif de réception supplémentaire (16).

3. Dispositif de détection de couple (10, 20, 30) selon la revendication 1 ou 2, **caractérisé en ce qu'**au moins un capteur magnétique supplémentaire (16A) du dispositif de réception supplémentaire (16) pour détecter une densité de flux magnétique du champ parasite magnétique est disposé en étant orienté de telle sorte que la densité de flux magnétique du champ parasite est détectée dans une direction en parallèle à la direction d'au moins une densité de flux magnétique qui est détectée par au moins un capteur magnétique (15A, 15B) du premier dispositif de réception (15).

4. Dispositif de détection de couple (10, 20, 30) selon au moins l'une des revendications précédentes, **caractérisé en ce qu'**au moins le premier capteur magnétique (15A) du premier dispositif de réception (15) et au moins le capteur magnétique supplémentaire (16A) du dispositif de réception supplémentaire (16) sont disposés sur une carte de circuits imprimés (14) commune.

5. Dispositif de détection de couple (10, 20, 30) selon au moins l'une des revendications précédentes, en particulier selon la revendication 4, **caractérisé en ce qu'**au moins un capteur magnétique supplémentaire (16A) du dispositif de réception supplémentaire (16), de préférence l'ensemble des capteurs magnétiques (16A) du dispositif de réception supplémentaire (16), est disposé en dehors d'un champ de dispersion magnétique agissant en dehors du volume magnétiquement efficace (17) .

6. Dispositif de détection de couple (20) selon au moins l'une des revendications précédentes, **caractérisé en ce que** le dispositif de détection de couple (20) présente au moins un dispositif de blindage (18) pour le blindage magnétique du dispositif de réception supplémentaire (16) par rapport au champ de dispersion, en particulier au moins pour le blindage du capteur magnétique supplémentaire (16A) du dispositif de réception supplémentaire (16), le dispositif de blindage (18) présentant de préférence au moins une tôle de blindage (18) réalisée en correspondance et disposée en correspondance.

7. Véhicule automobile équipé d'un arbre de direction et d'un dispositif de détection de couple (10, 20, 30) pour détecter un couple appliqué sur l'arbre de direction, **caractérisé en ce que** le dispositif de détection de couple (10, 20, 30) est réalisé selon l'une quelconque des revendications 1 à 6.
